Europäisches Patentamt

European Patent Office

Office européen des brevets

(19)

(11) Publication number: **0 193 501**
**A2**

(12) **EUROPEAN PATENT APPLICATION**

(21) Application number: 86830043.5

(22) Date of filing: 20.02.86

(51) Int. Cl.⁴: **B60R 9/04**

(30) Priority: 25.02.85 IT 5302985 U

(43) Date of publication of application:
03.09.86 Bulletin 86/36

(84) Designated Contracting States:
AT BE CH DE FR GB LI LU NL SE

(71) Applicant: **G.E.V. Ricambi S.p.A.**
**Via Botticelli, 61-63**
**I-10154 Torino(IT)**

(72) Inventor: **Piodi, Roberto**
**Via Botticelli 61**
**I-10154 Torino(IT)**

(74) Representative: **Buzzi, Franco et al**
**c/o Jacobacci-Casetta & Perani S.p.A. Via Alfieri, 17**
**I-10121 Torino(IT)**

(54) Roof rack for use on motor cars with or without gutters.

(57) A roof rack for use on motor cars with or without gutters, having at the end of each crossbar (10) a substantially vertical support member (24, 30) which is adjustable in height and carries at its lower end an element (60) for bearing on the roof (T) of the car, an inclined engagement member (38) having a shaped gripping part (44) at its lower end, and interconnecting and locking means (50, 54) which act in such a way as to tend to reduce the distance and difference in height between the gripping part (44) and the bearing element (60).

FIG.3

Roof rack for use on motor cars with or without gutters

The present invention relates generally to roof racks for motor cars, of the type comprising at least one pair of crossbars provided at their ends with means of releasable connection to the roof of a car.

The term "roof rack" is intended to mean a device for supporting and securing not only luggage but any load which can be carried on the roof of a motor car, such as, for example, skis, surfboards, boats, bicycles or other things.

As is well known to manufacturers and users of roof racks of the type described above, the cars currently on the road have roofs which vary considerably in shape from one another and this makes it practically impossible to adapt the traditional roof racks available on the market. In fact, there are cars whose roofs have traditional longitudinal gutters on the sides, cars which do not have such gutters but have suitable anchoring recesses adjacent their roofs, and cars in which these anchorages consist simply of the upper edges of the openings of the side doors or of the windows in the case of cars without rear side doors.

At present, for each of the aforesaid types of the car, there is a corresponding roof rack provided with connecting means specially intended for the specific model and completely useless on other models.

This entails obvious problems both for manufacturers and retailers, owing to the difficulties of production and storage, and for the users who are obliged to acquire the appropriate roof rack in the event of them changing their car.

The object of the present invention is precisely that of avoiding the aforesaid disadvantage and realizing a roof rack of the type specified initially which will be "universal", that is, useable on motor cars with or without gutters and, in practice, on nearly all car models currently in production.

With a view to achieving this object, the present invention has as its subject a roof rack of the type specified above, the main characteristic of which resides in the fact that the connecting means comprise, for each end of each crossbar:

-a substantially vertical support member which is adjustable in height and carries at its lower end an element for bearing on the roof of the car,

-an engagement member facing the support member and inclined relative thereto, the engagement member bearing at its upper end against the end of the crossbar and having at its lower end a shaped gripping part engageable equally well beneath the gutter, the upper edge of the opening of a side door or of a window opening, or a suitable anchoring part predisposed in correspondence with these areas of a car, and

- interconnecting and locking means between the end of the crossbar, the engagement member and the support member, which act in such a way as to tend to reduce the distance and the difference in height between the gripping part and the bearing element.

By virtue of this characteristic, and in particular to the possibility of adjusting the height of the support member, the roof rack according to the invention can in fact be used on almost any type of car currently in production. Moreover, the aforementioned conformation of the connecting means ensures maximum firmness and security of anchorage of the roof rack, in that the fastening of the interconnecting and locking means tends to cause the engagement members carried at the ends of the crossbars to converge towards the centre line of the car, whereby they are subject to compression in the fitted condition.

According to another particularly advantageous characteristic of the invention, each bearing element is connected pivotally to the respective support member.

This characteristic enables the roof rack to be perfectly adapted to the slope or curvature of the car roof on which it is placed.

In order to ensure correct support of the roof rack and to avoid warping of the roof in the case of roofs of a more fragile structure, the bearing element also includes, to advantage, a load-distributing member formed by a plate covered by elastomeric material and intended to be interposed between the bearing element and the car roof.

In order to render simpler and easier the operations of adapting the roof rack to different types of car, each crossbar is formed so as to allow adjustment of the distance between the connecting means.

The interconnecting and locking means conveniently comprise a simple inclined screw provided, to advantage, with a hollow head having a seat engageable by a tool of unusual shape, such as of elliptical section or the like, for the prevention of theft.

According to another advantageous characteristic of the invention, a strip of flexible material, conveniently formed from sectors of rubber, is fitted to the crossbar intended to be mounted towards the front of the car and is designed to rest on the roof of the car so as to define an aerodynamic deflector.

Further characteristics and advantages of the invention will become apparent from the detailed description which follows with reference to the appended drawings provided purely by way of non-limiting example, in which:

Figure 1 is a diagrammatic perspective view of a motor car to which a roof rack according to the invention has been fitted,

Figure 2 is a diagrammatic perspective view of a detail of the roof rack,

Figure 3 is a perspective view of the detail in Figure 2 from another angle,

Figure 4 is a partially-sectioned view along the line IV-IV of Figure 3,

Figure 5 is an exploded perspective view of Figure 2,

Figure 6 is a cross-sectional view of the detail illustrated in Figures 2 to 5 when it is fitted to the roof of the car illustrated in Figure 1,

Figure 7 shows the detail fitted to a different car,

Figure 8 illustrates the detail again fitted to another different car,

Figure 9 is a perspective view of an additional detail fitted to the roof rack, and

Figure 10 is a scrap perspective view of a component of the roof rack on an enlarged scale.

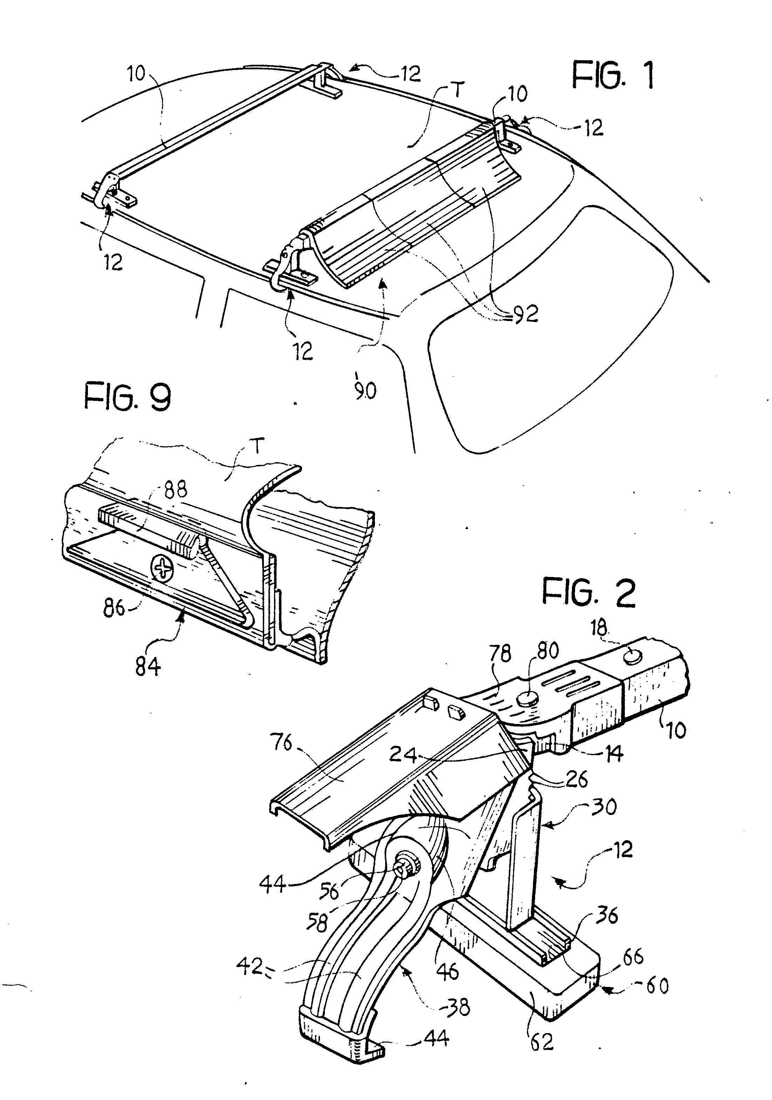

Referring initially to Figure 1, there is shown the roof T of a motor car to which is fitted a roof rack according to the invention, formed from two tubular spaced-apart crossbars 10, usually of plastics-coated metal, fixed at their ends to the roof T by means of respective releasable connecting units, generally indicated 12.

It is specified that in this specification the terms horizontal and vertical, upper and lower, top and bottom, and the like are intended to refer to the installed condition of the roof rack on the roof of a car.

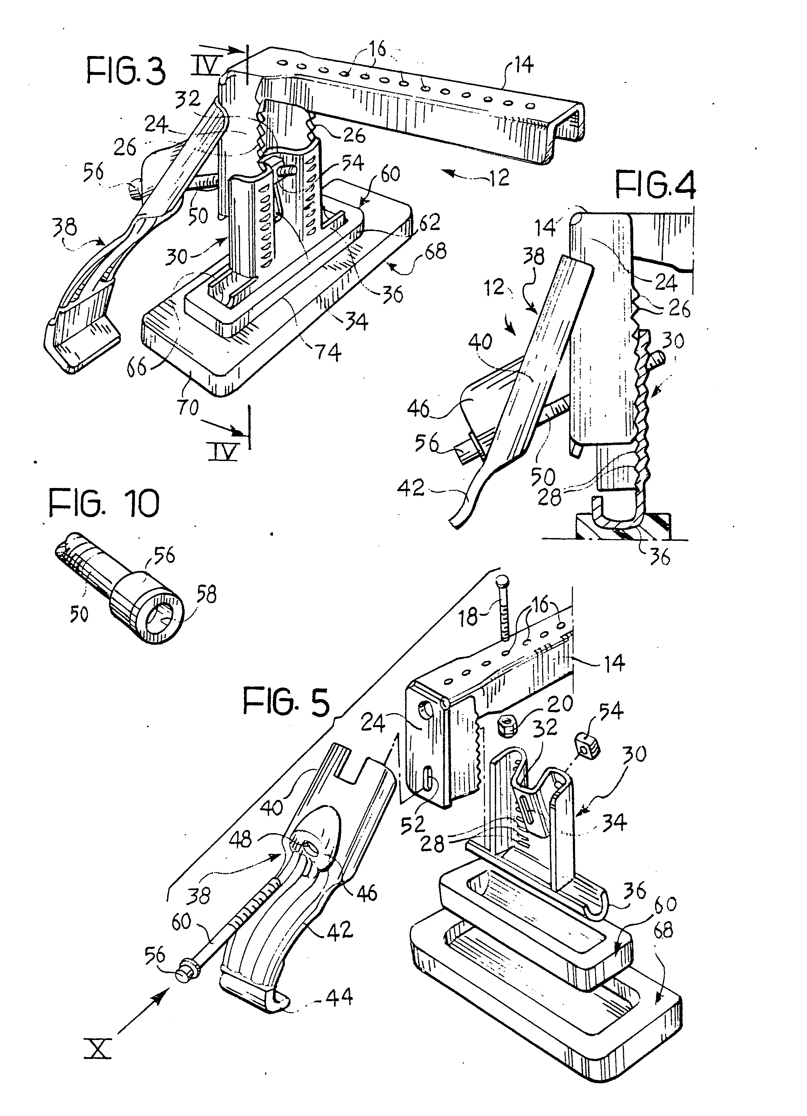

One of the connecting units 12 is illustrated in detail in Figures 2 to 6.

Referring now to these Figures, each of the connecting units 12 comprises a channel-sectioned rod 14 fitted in a telescopically-slidable manner into one end of the crossbar 10, so as to constitute its end part. The rod 14 has a number of spaced-apart holes 16 which serve for its attachment to the crossbar 10 in the desired position of adjustment by means of a screw 18 with a locking nut 20 inserted through holes 22 in the crossbar 10. In practice, the holes 16 enable the projection of the connecting unit 12 from the end of the crossbar 10 to be varied.

The free end of the crossbar 14 has a portion 24 bent downwardly at 90° and the edges of the flanges of which have indentations 26.

The indentations 26 cooperate with two rows of complementary teeth 28 formed in an element acting as a strut 30 connected to the terminal portion 24, in the manner explained below.

The strut element 30 has a generally channel shape with a raised central part 32 having a slot 34 and a rounded lower end 36. This end 36 has a generally elongate semicylindrical shape with a horizontal axis directed perpendicular to the crossbar 10.

The connecting unit 12 also includes an engagement member, generally indicated 38, located on the opposite side of the bent portion 24 to the strut element 30, that is outside of it.

The engagement member 38 consists of a shaped metal element having an upper channel-sectioned portion 40 and a lower arcuate portion 42 with a free end bent back to form a gripping part 44 covered by elastomeric material.

A projection 46 with a hole 48 is formed between the upper portion 40 and the lower portion 42.

A screw 50 which interconnects the engagement member 38, the bent portion 24 and the strut element 30 is inserted in the hole 48. In effect, the stem of the screw 50 passes through the hole 48, a vertical slot 52 made in the lower region of the bent portion 24 and the slot 34 in the strut element 30, and at its end is screwed into a square nut 54 placed against the outer face of the raised area 32 so that it is locked against rotation by the sides of the latter.

As can be seen in the drawings, the screw 50 is inclined upwardly in the direction of the crossbar 10, and its head 56 bears against the projection 46 of the engagement member 38. To advantage, this head 46 has a seat 58 which can be engaged by a tool or operating key of unusual shape provided with the roof rack. This seat may, for example, have an elliptical or oval cross-section whereby it can be engaged only by like tools and not by tools of a different type, so as to afford some protection against possible attempts to steal the roof rack.

The lower portion 42 and the gripping part 44 of the engagement member 38 have a conformation such as to ensure efficient engagement from below with the traditional roof rack attachment parts, whatever their shape, with which the cars currently in production are provided. In other words, as will be seen below, the gripping part 44 can be used to couple the roof rack to the gutters or channels provided on the roofs of some types of cars, to the upper edge of the opening of a side door or window opening, or to an appropriate anchoring part predisposed in correspondence with these areas in the case of cars without gutters.

The connecting unit 12 further includes a bearing element 60 formed by an elongate block of elastomeric material 62 incorporating a metal core 64 and having on its upper surface a notch 66 with a shape complementary to that of the cylindrical surface of the part 36 of the strut 30. In effect, this part 36 is arranged to engage the notch 66 so as to allow the bearing element 60 to be oriented relative to the strut element 30.

In addition to the bearing element 60, each connecting unit 12 may also have a load-distributing member 68 constituted by a plate of elastomeric material 70 incorporating a metal reinforcement 72 and having at the top a seat 74 for the insertion of the bearing element 60 by means of a form coupling.

Each connecting unit 12 includes, moreover, a protective cover of plastics material 76 pivotally supported by a section of elastomeric material 78 fixed to the outer end of the rod 14 by a press-stud 80 or the like fitted into the last of the holes 16.

The method of assembly of the roof rack according to the invention will now be described below, still with reference to one of the connecting units 12 since the method is identical for each of these units.

The first stage consists of the adjustment of the position of the rod 14 relative to the crossbar 10 in accordance with the instructions which will be supplied with the roof rack when it is put on sale.

When the rod 14 is locked relative to the crossbar 10 by means of the screw 18 and the nut 20, the position of the strut element 30 is adjusted relative to the bent portion 24 of the rod 14. For this operation it suffices to loosen the screw 50 and place the upper edge of the strut element 30 in correspondence with the indentations 26 which will be indicated, for each type of car, in the instructions accompanying the roof rack.

The bearing element 60 and the lower part 36 of the strut element 30 are then pressed together and the bearing element 60 is placed on the roof T of the car in the area chosen for the fixing of the crossbar 10, possibly with the interposition of the load distributor 68. The latter is necessary only in the case where the bearing zone of the element 60 is situated in the immediate vicinity of the lateral edge of the roof T, or in the case of a roof having low resistance to failure.

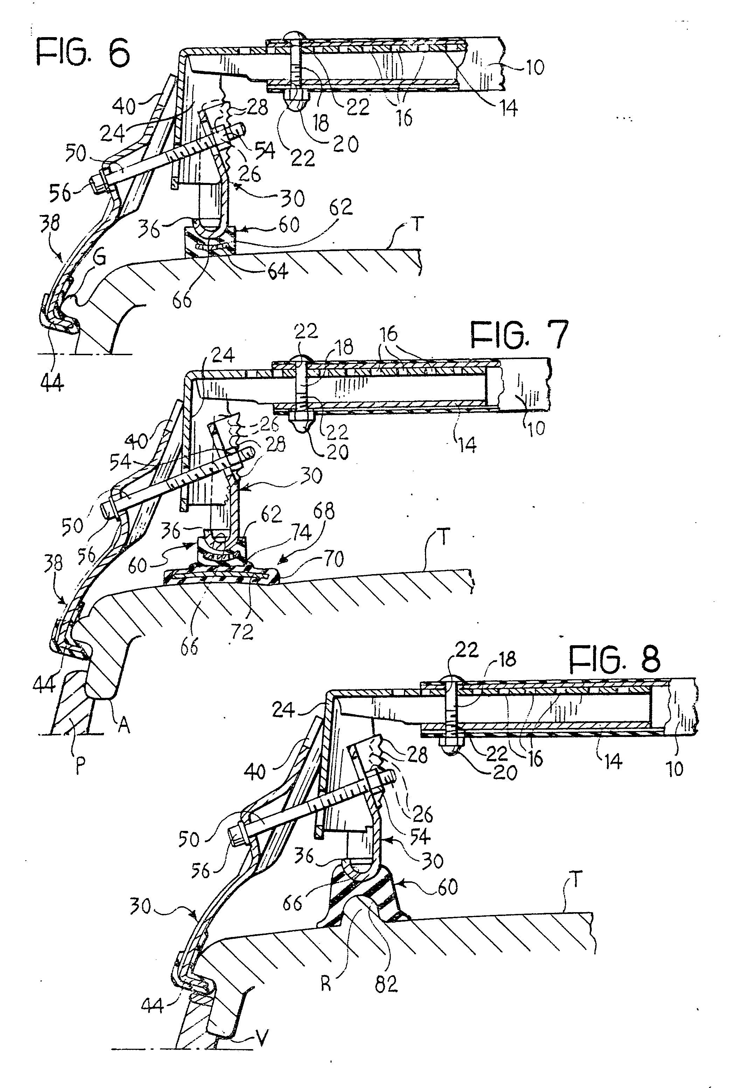

Next, with the screw 50 still slackened, the gripping part 44 of the engagement member 38 is placed below the corresponding anchorage area of the car. In the case of Figures 1 and 6, this anchorage part consists of a gutter G at the side of the roof T. In this case, the fastening part 44 is fitted beneath the gutter G, as clearly shown in Figure 6.

Finally, locking is effected by tightening the screw into the nut 54.

As a result of this locking, the bearing element 60 and the gripping part 44 tend to reduce the distance and difference in height between them, while the upper portion 40 of the fixing member 38 presses against the dorsal surface of the inclined portion 24 of the rod 14. Thus, in the fully locked condition, the crossbar 10 will be urged into compression by the fixing members 38 of the two connecting units 12 at its ends.

As a last step, the protective element 76 is fitted.

Figures 7 and 8 illustrate the connecting unit 12 fitted to car roofs T without gutters G.

In the first case (Figure 7) the gripping part 44 is fitted beneath the upper edge of the opening A of a side door P and the load distributor 68 is shown in use.

In the second case (Figure 8) the gripping part 44 is fitted beneath the upper edge of a side window opening V and the bearing element 60 has in a notch 82 its lower surface which is coupled with a longitudinal ridge R with which the roof T is provided. Figure 8 is particularly concerned with use on a Fiat Panda.

In both the cases described above, the methods of fitting and assembling the connecting unit 12 are exactly the same as those described previously with reference to Figures 1 and 6.

As will be understood, the configuration of the units 12 is such as to allow the roof rack according to the invention to be fitted to practically any type of production car, with or without gutters, and in the second case with or without appropriate anchorage parts provided at the sides of the roof.

In the case of cars in which the anchorage parts consist simply of threaded holes with horizontal axes formed in the sides of the roof, as in the case of the Lancia Thema, the roof rack according to the invention is also provided with plates which can be fixed by means of the holes and are shaped so as to allow the anchorage of the gripping parts 44 of the engagement members 38. One of these plates is indicated 84 in Figure 9. As shown, it is fixed in the hole in the side of the car roof T by a screw 86, and at its upper end has an anchorage·projection 88 engaged firmly from below by the gripping part 44 of the member 38.

According to a further characteristic of the invention, one of the crossbars 12, and in particular the one intended to be fitted towards the front of the car roof T, is provided with an aerodynamic deflector 90 which serves to reduce the resistance to forward motion of the car on which the roof rack is installed.

As can be seen in detail in Figure 1, this deflector 90 is constituted, to advantage, by a strip of flexible material which rests on the roof T in front of the front crossbar 10, so as to assume a curved configuration. This strip 90 is conveniently formed from three sectors of elastomer material 92 placed side by side and each provided with a tubular roof part 94 fitted onto the crossbar 10.

**Claims**

1. Roof rack for motor cars, of the type comprising at least one pair of crossbars provided at their ends with means for releasable connection to the roof of a car, characterised in that the connecting means (12) comprise, for each end of each crossbar (10):

-a substantially vertical support member (24, 30) which is adjustable in height and carries at its lower end an element (60) for bearing on the roof (T) of the car,

-an engagement member (38) facing the support member - (24, 30) and inclined relative thereto, the engagement member (38) bearing at its upper end against the end (14) of the crossbar (10) and having at its lower end a shaped gripping part (44) engageable equally well beneath the gutter (G), the upper edge of the opening (A) of the slide door (P) or a window opening (V), or an appropriate anchorage part predisposed in correspondence with these areas of a car, and

-interconnecting and locking means (50, 54) between the end (14) of crossbar, the engagement member (38) and the support member (24, 30), which act in such a way as to tend to reduce the distance and difference in height between the gripping part (44) and the bearing element (60).

2. Roof rack according to Claim 1, characterised in that the bearing element (60) is connected pivotably to the support member (24, 30).

3. Roof rack according to Claim 1 or Claim 2, characterised in that the support member comprises a terminal portion - (24) of the end (14) of the crossbar (10) which is bent at right angles to the crossbar and has indented surfaces (26), and a strut element (30) with teeth (28) which are intended to cooperate with the indentations (26) of the bent terminal portion (24) so as to position the strut element (30) in a plurality of different adjustment levels relative to the bent terminal portion (24).

4. Roof rack according to Claim 3, characterised in that the strut element (30) has at its lower end a horizontal part with a cylindrical surface (36) having its axis perpendicular to the crossbar (10), and in that the bearing element (60) comprises a block (62) of elastically yielding material having a notch (66) into which the part of the strut element (30) with the cylindrical surface (36) is press-fitted.

5. Roof rack according to Claim 4, characterised in that the bearing element (60) is attached to a load-distributing member (68) formed by a plate (72) covered in elastomeric material (70) and intended to be interposed between the block (62) and the car roof (T).

6. Roof rack according to Claim 3, characterised in that the bent terminal portion (24) is carried by a rod (14) which is telescopically adjustable relative to the crossbar (10), and in that means (18, 20) are provided for locking the rod (14) in a series of positions of adjustment relative to the crossbar - (10).

7. Roof rack according to Claim 3, characterised in that the interconnecting and locking means comprise a screw (50) inclined upwardly towards the crossbar (10) and inserted through the engagement member (38), the bent terminal portion (24) of the crossbar (10) and the strut element (30) of the support member.

8. Roof rack according to Claim 7, characterised in that the screw (50) has a hollow head (56) with a seat (58) engageable by a hand tool of unusual shape, for example with an elliptical cross-section or the like.

9. Roof rack according to one or more of the preceding claims, for use on cars in which the anchorage parts predisposed for the retention of roof racks are constituted by threaded holes with horizontal axes formed in the sides of the roof, characterised in that it is further provided with plates (84) for attachment to the car by respective screws - (86) engageable in the holes, the plates (84) having anchorage projections (88) engageable by the gripping parts - (44) of the anchoring members (38).

10. Roof rack according to one or more of the preceding claims, characterised in that the crossbar (10) intended to be fitted towards the front of the car is provided with an aerodynamic deflector (90).

11. Roof rack according to Claim 10, characterised in that the aerodynamic deflector (90) is formed by a strip of flexible material (92) intended to rest on the roof (T) in front of the crossbar (10).

12. Roof rack according to Claim 11, characterised in that the strip of flexible material (90) consists of a series of sectors of elastomer material (92) placed side by side, each of which has a tubular root part (94) fitted to the crossbar (10).

0 193 501

FIG. 1

FIG. 9

FIG. 2

FIG. 3

FIG. 4

FIG. 10

FIG. 5

0 193 501

FIG. 6

40
24
50
56
38
G
44

28
54
26
36
64
66

18
22
20
22

22
16
30
60
62
10
14
T

FIG. 7

24
22
18
16

40
54
50
56
38
44
A
P

26
28
30
36
60
66
72

22
20
14
10

62
68
74
70

T

FIG. 8

22
18

24
40
50
56

28
36
66
30

26
54
30
60

22
20
16
14
10

R
82
44
V
T